# FASCICULE DE BREVET EUROPEEN

(11) **EP 0 634 314 B1**
(45) Date de publication et mention de la délivrance du brevet: **23.04.1997**
(21) Numéro de dépôt: 94401619.5
(22) Date de dépôt: 12.07.1994
(51) Int. Cl.: B62D 1/19

(54) **Ensemble de colonne de direction rétractable axialement en cas de choc, notamment pour véhicule automobile**
Im Fall eines Stosses axial zurückziehbare Lenksäuleneinheit, insbesondere für ein Kraftfahrzeug
Steering column unit, axially retractable in case of shock, especially for a motor vehicle

(30) Priorité: 16.07.1993 FR 9308779
(43) Date de publication de la demande: 18.01.1995
(73) Titulaire: ECIA - EQUIPEMENTS ET COMPOSANTS POUR L'INDUSTRIE AUTOMOBILE, F-25400 Audincourt (FR)
(72) Inventeur: Passebecq, Ghislain, F-25400 Audincourt (FR)
(74) Mandataire: Habasque, Etienne Joel Jean-François

(56) Documents cités:
- EP-A- 0 317 791
- EP-A- 0 470 888
- WO-A-88/05741

## Description

La présente invention concerne un ensemble de colonne de direction rétractable axialement en cas de choc, notamment pour véhicule automobile.

La sécurité des passagers et en particulier du conducteur d'un véhicule automobile est un souci constant des équipementiers et des constructeurs de véhicules.

Pour réduire les risques de blessure de ces passagers en cas de choc, on a développé dans l'état de la technique un certain nombre de systèmes de protection de ceux-ci.

C'est ainsi par exemple que l'on a développé des systèmes de ceinture de sécurité plus ou moins perfectionnés, pour maintenir les passagers d'un véhicule sur leur siège en cas de choc.

On a également proposé d'intégrer des modules à sac gonflable par exemple dans le coussin central du volant de direction du véhicule et dans la planche de bord du côté du passager avant de celui-ci.

On conçoit en particulier que le volant de direction peut devenir extrêmement dangereux pour le conducteur d'un véhicule en cas de choc.

En effet, la tête du conducteur vient fréquemment heurter le volant de direction lors d'un choc et il arrive également, lors d'un choc frontal important, que l'ensemble de colonne de direction portant ce volant se déplace à l'intérieur de l'habitacle du véhicule, en direction du conducteur, ce qui augmente encore les risques de blessure de celui-ci.

Pour tenter de résoudre ces problèmes, on a alors développé dans l'état de la technique, des ensembles de colonne de direction rétractables axialement en cas de choc, qui comportent une structure de support fixée sur le reste du véhicule et sur laquelle sont fixées des extrémités d'un corps de colonne dans lequel est disposé un arbre de direction.

Ces ensembles de colonne comportent également des moyens de rétraction axiale du corps de colonne et donc de l'arbre de direction en cas de choc, pour provoquer une rétraction de ce corps dans la planche de bord du véhicule et donc éloigner le volant du conducteur du véhicule, lors d'un choc.

Dans l'état de la technique, les moyens de rétraction sont par exemple constitués par un ou plusieurs câbles de traction associés à des moyens de renvoi, l'une des extrémités du ou de chaque câble étant reliée au moteur du véhicule et l'autre à l'ensemble de colonne, pour provoquer la rétraction de celui-ci en fonction du recul du moteur lors du choc.

Cependant, ces ensembles présentent un certain nombre d'inconvénients, notamment au niveau de leur structure extrêmement complexe et encombrante, de leur coût, et de leur fiabilité.

Le document WO-A-88 05 741 décrit un ensemble de colonne conforme au préambule de la revendication 1.

Cependant, dans ce document, le générateur d'effort est adapté pour déplacer le corps et l'arbre de direction vers l'avant du véhicule et l'on conçoit que ceci peut présenter un certain nombre de problèmes si un obstacle quelconque vient géner ce déplacement du corps et de l'arbre ou si un organe quelconque du véhicule vient pousser sur ceux-ci, ce qui a pour conséquence soit d'empêcher la rétraction de la colonne, soit de provoquer la remontée de celle-ci dans l'habitacle du véhicule.

Le but de l'invention est donc de résoudre ces problèmes en proposant un ensemble de colonne de direction rétractable axialement en cas de choc, qui soit simple et fiable.

A cet effet, l'invention a pour objet un ensemble de colonne de direction rétractable axialement en cas de choc, notamment pour véhicule automobile, du type comportant une structure de support fixée sur le reste du véhicule et sur laquelle sont fixées des extrémités d'un corps de colonne de direction dans lequel est disposé un arbre de direction, et des moyens de rétraction axiale du corps de colonne et donc de l'arbre de direction en cas de choc, ces moyens de rétraction comprenant un générateur d'effort à déclenchement au choc, de déplacement du corps par rapport à la structure de support, ce générateur comportant deux parties déplaçables l'une par rapport à l'autre, l'une étant reliée à la structure de support et l'autre au corps à proximité d'une extrémité de celui-ci, cette extrémité du corps étant reliée à la structure de support par des moyens de fixation débrayables lors du déclenchement du générateur d'effort, et comportant des moyens de guidage adaptés pour coopérer avec des moyens de guidage complémentaires de la structure de support, caractérisé en ce que les moyens de fixation de l'autre extrémité du corps sur la structure de support comportent un palier de guidage de celui-ci, et en ce que le corps de colonne de direction et l'arbre de direction comprennent chacun deux parties télescopiques l'une dans l'autre.

L'invention sera mieux comprise à l'aide de la description qui va suivre, donnée uniquement à titre d'exemple et faite en se référant aux dessins annexés, sur lesquels :

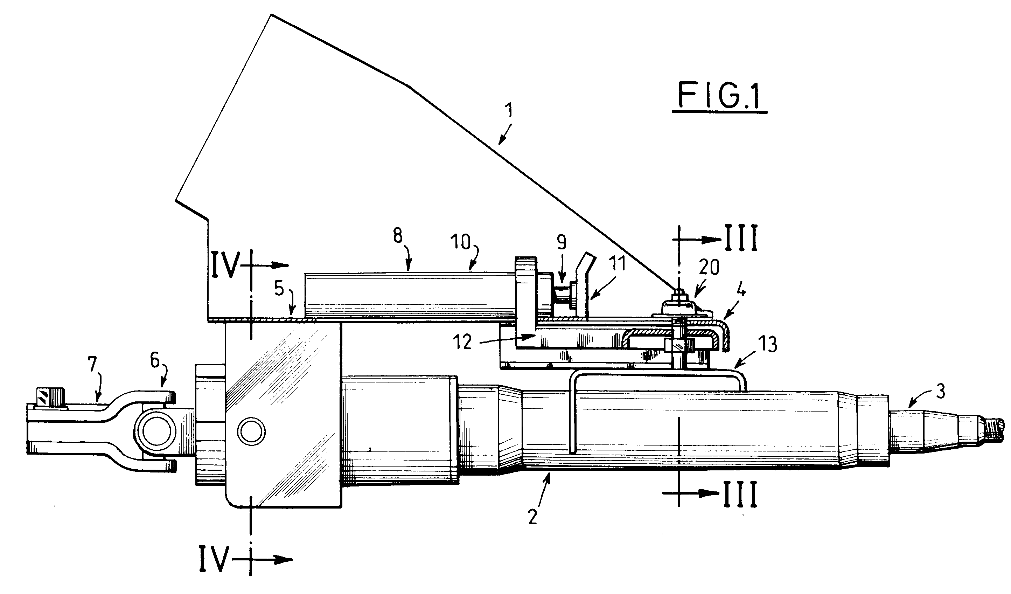

- la Fig.1 représente une vue schématique de côté d'un ensemble de colonne de direction selon l'invention, en position normale de fonctionnement;
- la Fig.2 représente une vue de dessus partiellement en coupe d'un corps de colonne entrant dans la constitution de l'ensemble de colonne de direction représenté sur la Fig.1;
- la Fig.3 représente une vue en coupe prise suivant la ligne III-III de la Fig.1;
- la Fig.4 représente une vue en coupe prise suivant la ligne IV-IV de la Fig.1; et
- la Fig.5 représente une vue schématique de côté d'un ensemble de colonne de direction selon l'invention, en position rétractée.

Ainsi qu'on peut le voir sur ces figures, un ensemble de colonne direction rétractable axialement en cas de choc, notamment pour véhicule automobile, selon l'invention, comporte une structure de support désignée par la référence générale 1 fixée sur le reste du véhicule (non représenté) et sur laquelle sont fixées des extrémités d'un corps de colonne de direction désigné de façon générale par la référence 2.

Un arbre de direction 3 est disposé dans ce corps de colonne 2.

De façon classique, cet arbre est mobile en rotation mais bloqué en translation dans ce corps.

Une extrémité du corps de colonne de direction est fixée en 4 sur la structure de support tandis que l'autre extrémité de celui-ci est fixée en 5 sur cette structure.

L'une des extrémités de l'arbre de direction est adaptée pour recevoir un volant de direction, tandis que l'autre extrémité de celui-ci est adaptée pour être reliée en 6, au reste 7 du mécanisme de direction du véhicule, par exemple par l'intermédiaire d'une articulation à la cardan.

Par ailleurs, l'ensemble de colonne de direction selon l'invention comporte également des moyens de rétraction axiale du corps et donc de l'arbre de direction et du volant en cas de choc, par rapport à la structure de support.

Ces moyens de rétraction sont désignés de façon générale par la référence 8 sur cette figure et comprennent un générateur d'effort à déclenchement au choc, de déplacement à coulissement du corps 2 par rapport à la structure de support 1.

En fait, ce générateur d'effort comporte deux parties par exemple 9 et 10 déplaçables l'une par rapport à l'autre, l'une par exemple 9 étant reliée à la structure de support 1 par l'intermédiaire d'une patte d'appui 11 de celle-ci et l'autre par exemple 10, étant reliée au corps 2 par exemple par l'intermédiaire d'une ferrure de liaison 12. Une extrémité de cette ferrure de liaison 12 est fixée sur la partie 10 du générateur et l'autre est reliée au corps à proximité d'une extrémité de celui-ci et plus particulièrement de l'extrémité de celui-ci la plus proche du volant porté par l'arbre, dans l'exemple illustré.

Le générateur d'effort peut être de tout type approprié, comme par exemple un générateur pyrotechnique, un générateur à gaz ou encore un générateur comportant un organe élastique bandé, dont le déclenchement est assuré par exemple par le reste des circuits du véhicule lors de la détection d'un choc.

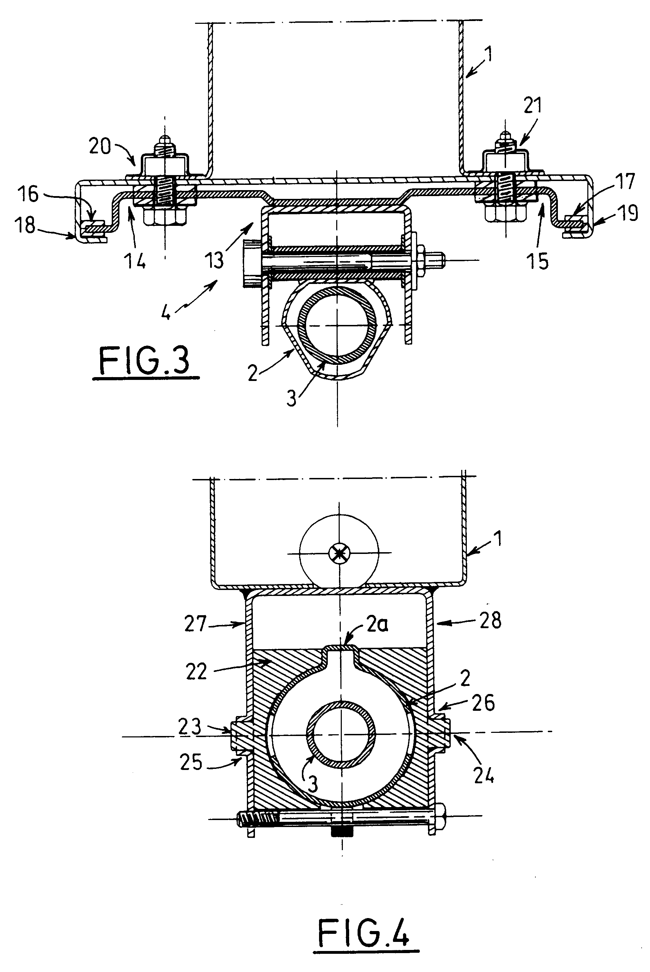

Comme on peut le voir plus particulièrement sur la Fig.3, l'extrémité du corps 2 à laquelle est relié le générateur d'effort et plus particulièrement la partie 10 de celui-ci, par la ferrure de liaison 12, comporte par exemple une ferrure de montage 13 munie d'ailes latérales 14 et 15 dont les extrémités comportent par exemple des patins de guidage 16 et 17 adaptés pour coopérer avec des glissières complémentaires 18 et 19 de la structure de support 1, lors du déplacement du corps par rapport à la structure de support, pour guider ce déplacement.

Cependant, en position normale de fonctionnement, cette extrémité du corps est fixée sur la structure de support 1 par l'intermédiaire de moyens de fixation débrayables constitués par exemple par des moyens d'immobilisation par friction ou par des boulons cisaillables 20 et 21 ou autres.

Comme cela sera décrit plus en détail par la suite, ces boulons 20 et 21 sont cisaillables lors du déclenchement du générateur d'effort.

Comme cela est illustré sur la Fig.4, les moyens de fixation de l'autre extrémité du corps sur la structure de support, disposés en 5, comportent quant à eux un palier 22 de guidage à coulissement de celui-ci lors du déclenchement du générateur d'effort.

On notera en regard de cette figure 4 que le corps 2 peut par exemple comporter une partie en saillie 2a adaptée pour coopérer avec des surfaces de butée complémentaires de ce palier pour assurer une fonction antivol du véhicule.

Ce palier peut par exemple être constitué de matière plastique.

Celui-ci comporte avantageusement deux parties en saillie latérale 23 et 24 adaptées pour s'engager dans des canons de liaison 25 et 26 de flasques 27 et 28 de la structure de support 1.

Le fonctionnement de l'ensemble qui vient d'être décrit est le suivant.

On notera tout d'abord que l'exemple de réalisation qui vient d'être décrit se rapporte à un ensemble de colonne de direction fixe en position, c'est à dire qui ne peut pas être réglé en position par l'utilisateur.

Il va de soi cependant que cette possibilité peut être envisagée en modifiant simplement la structure de la ferrure de montage 13 décrite en regard de la Fig.3 et en prévoyant dans celle-ci, des lumières de guidage du corps et des moyens de blocage en position adaptés pour être manipulés par l'utilisateur, comme cela est connu dans l'état de la technique.

Dans l'état de fonctionnement normal de l'ensemble de colonne de direction, le générateur d'effort 8 n'est pas déclenché et l'extrémité correspondante du corps est fixée sur la structure de support par l'intermédiaire des boulons 20 et 21.

L'autre extrémité du corps est maintenue en position par l'intermédiaire du palier 22.

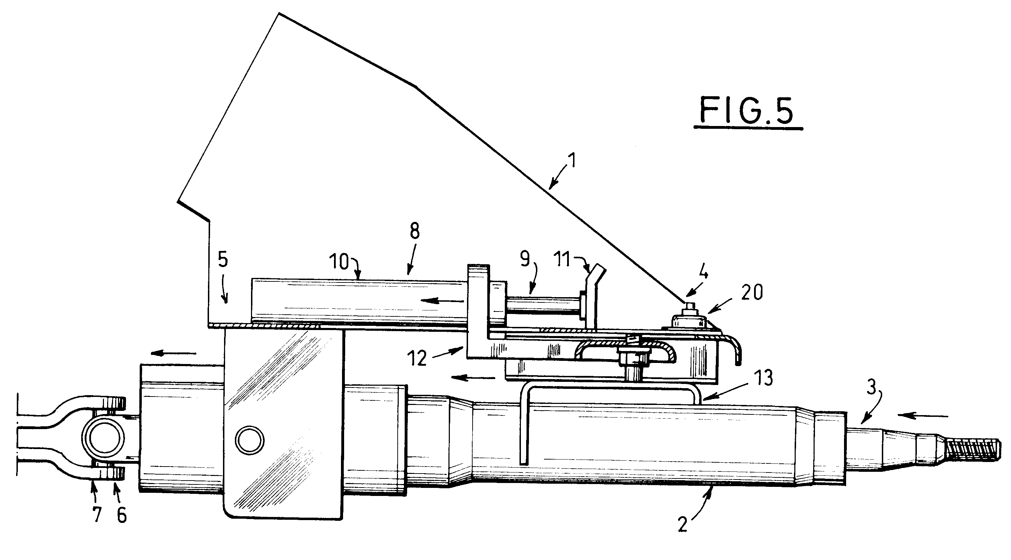

En cas de choc et comme on peut le voir sur la Fig.5, le générateur d'effort 8 est déclenché, par exemple par le reste des circuits du véhicule.

La partie 9 de celui-ci étant en appui sur la patte 11 de la structure de support, la partie 10 de ce générateur d'effort tend à reculer par rapport à la structure de support en entraînant le corps de colonne de direction 2 par l'intermédiaire de la ferrure de liaison 12.

Cet effort d'entraînement provoque la rupture des boulons cisaillables 20 et 21 et donc la libération de cette extrémité du corps par rapport à la structure de support.

La rupture de ces boulons frangibles 20 et 21 autorise alors un déplacement à coulissement du corps de colonne de direction, et donc de l'arbre de direction, par rapport à la structure de support, ce coulissement étant guidé d'une part par les moyens de guidage complémentaires de cette extrémité du corps, constitués par les patins de guidage 16,17 des ailes latérales 14 et 15 de la ferrure de montage et les glissières 18 et 19 de la structure de support et d'autre part, par le palier de guidage 22 de l'autre extrémité du corps.

Le corps et l'arbre et donc le volant porté par celui-ci reculent alors par rapport à la structure de support jusqu'à une position rétractée de sécurité représentée sur la Fig.5.

Le fonctionnement qui vient d'être décrit suppose que le mouvement de rétraction de ce corps ne soit pas géné par un obstacle quelconque au niveau de l'articulation à la cardan de l'arbre de direction sur le reste du mécanisme de direction du véhicule.

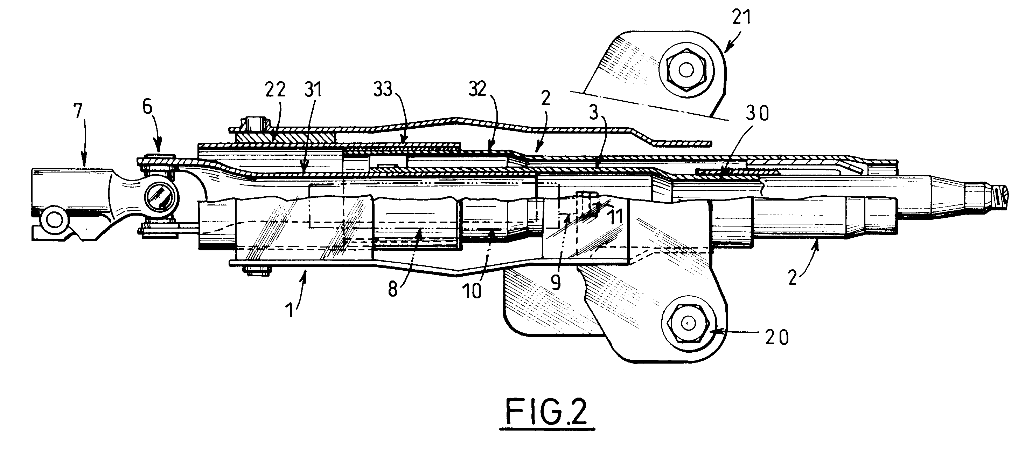

Pour résoudre les problèmes de présence d'un obstacle à ce niveau ou de remontée d'un organe quelconque du véhicule qui aurait tendance à pousser sur cette extrémité de l'arbre ou du corps de colonne afin de le faire remonter vers sa position normale, l'arbre de direction et le corps de colonne de direction peuvent avantageusement être constitués chacun de deux parties télescopiques l'une dans l'autre, comme on peut le voir sur la Fig.2.

On peut en effet constater sur cette figure que l'arbre de direction 3 est en fait constitué de deux parties télescopiques 30 et 31 et que le corps de colonne de direction 2 est également constitué de deux parties télescopiques 32 et 33, les parties correspondantes d'arbre et de corps étant bloquées axialement en position l'une par rapport à l'autre, de façon classique.

On conçoit alors que si un obstacle gène la rétraction du corps de colonne, en bloquant par exemple l'extrémité de l'arbre de direction reliée à l'articulation à la cardan, la rétraction de l'ensemble peut quand même avoir lieu dans la mesure où les parties d'arbre et de corps peuvent se déplacer l'une sur ou dans l'autre.

Ainsi par exemple dans le cas où la partie d'arbre 31 et la partie de corps 33 sont bloquées en position et ne peuvent pas reculer, la partie d'arbre 30 et la partie de corps 32 peuvent se déplacer autour et dans ces parties d'arbre et de corps pour assurer la rétraction de l'ensemble.

Ce déplacement télescopique des parties d'arbre et de corps est également envisageable dans le cas où le corps s'étant déplacé vers sa position rétractée après déclenchement du générateur d'effort, un organe quelconque du véhicule vient pousser l'articulation à la cardan ou l'extrémité correspondante du corps de colonne, pour tenter de faire remonter l'ensemble vers la position normale.

Dans ce cas, les parties d'arbre 30 et de corps 32 sont bloquées en position par exemple par l'intermédiaire du générateur d'effort qui est alors muni de moyens anti-retour de type classique et les parties d'arbre 31 et de corps 33 se déplacent alors autour et dans les parties correspondantes d'arbre et de corps 30 et 32 pour éviter cette remontée.

Bien entendu, ce blocage en position des parties d'arbre 30 et de corps 32 peut également être assuré par d'autres moyens tels que par des crans des glissières de la structure de support adaptés pour bloquer les patins des ailes de la ferrure de montage du corps.

Il va de soi que ces moyens anti-retour peuvent être prévus dans les deux exemples de réalisation de l'arbre et du corps décrits précédemment pour empêcher toute remontée du corps.

Enfin, d'autres modes de réalisation des moyens de guidage du corps et de la structure de support peuvent être envisagés.

En effet, dans la description qui précède, on a décrit des moyens de guidage comportant des patins de guidage du corps adaptés pour coopérer avec des glissières de la structure de support, mais on peut également envisager d'utiliser des moyens de guidage se présentant par exemple sous la forme d'une monture de liaison articulée sur le corps et sur la structure de support.

Dans ce cas, lors du déclenchement du générateur d'effort, le déplacement à coulissement du corps par rapport à la structure de support est combiné à un déplacement angulaire de celui-ci.

## Revendications

1. Ensemble de colonne de direction rétractable axialement en cas de choc, notamment pour véhicule automobile, du type comportant une structure de support (1) fixée sur le reste du véhicule et sur laquelle sont fixées des extrémités d'un corps de colonne de direction (2) dans lequel est disposé un arbre de direction (3), et des moyens (8) de rétraction axiale du corps de colonne et donc de l'arbre de direction en cas de choc, ces moyens de rétraction (8) comprenant un générateur d'effort à déclenchement au choc, de déplacement du corps (2) par rapport à la structure de support, ce générateur comportant deux parties déplaçables l'une par rapport à l'autre, l'une (9) étant reliée à la structure de support (1) et l'autre (10) au corps à proximité d'une extrémité de celui-ci, cette extrémité du corps étant reliée à la structure de support (1) par des moyens (20,21) de fixation débrayables lors du déclenchement du générateur d'effort, et comportant des moyens de guidage (16,17) adaptés pour coopérer avec des moyens (18,19) de guidage complémentaires de la structure de support (1), caractérisé en ce que les moyens de fixation de l'autre extrémité du corps sur la structure de support (1) comportent un palier (22) de guidage de celui-ci, et en ce que le corps de colonne de direction (2) et l'arbre de direction (3) comprennent chacun deux parties télescopiques l'une dans l'autre (30,31,32,33).

2. Ensemble selon la revendication 1, caractérisé en ce que les moyens de fixation débrayables comprennent des boulons cisaillables (20,21).

3. Ensemble selon la revendication 1, caractérisé en ce que les moyens de fixation débrayables comprennent des moyens d'immobilisation par friction.

4. Ensemble selon l'une quelconque des revendications précédentes, caractérisé en ce que le corps de colonne comporte une ferrure de montage (13) comprenant des ailes latérales (14,15) munies des moyens de fixation (20,21) et des moyens de guidage (16,17).

5. Ensemble selon la revendication 4, caractérisé en ce que les moyens de guidage du corps comprennent des patins de guidage (16,17) des ailes latérales de la ferrure de montage du corps, ces patins coopérant avec des glissières (18,19) de la structure de support.

6. Ensemble selon l'une quelconque des revendications précédentes, caractérisé en ce qu'il comporte des moyens de blocage en position rétractée du corps.

## Claims

1. Steering column unit axially retractable in the case of an impact, particularly for a car, of the type having a support structure (1) fixed to the remainder of the car and to which are fixed the ends of a steering column body (2), in which is placed a steering shaft (3), as well as means (8) for the axial retraction of the column body and therefore the steering shaft in the case of an impact, said retraction means (8) comprising an impact-tripped force generator, for the displacement of the body (2) relative to the support structure, said generator having two parts displaceable relative to one another, one (9) being connected to the support structure (1) and the other (10) to the body in the vicinity of one end thereof, said body end being connected to the support structure (1) by fixing means (20, 22) releasable during the tripping of the force generator, and incorporating guidance means (16, 17) for cooperating with complementary guidance means (18, 19) of the support structure (1), characterized in that the means for fixing the other end of the body to the support structure (1) comprise a flanged guide (22) for the same and that the steering column body (2) and the steering shaft (3) in each case have two mutually telescopic parts (30, 31, 32, 33).

2. Unit according to claim 1, characterized in that the releasable fixing means comprise shearable bolts (20, 21).

3. Unit according to claim 1, characterized in that the releasable fixing means comprise friction-based immobilizing means.

4. Unit according to any one of the preceding claims, characterized in that the column body has a mounting fitting (13) with side wings (14, 15) provided with fixing means (20, 21) and guidance means (16, 17).

5. Unit according to claim 4, characterized in that the guidance means of the body comprise guide pads (16, 17) of the lateral wings of the mounting fitting of the body, said pads cooperating with slides (18, 19) of the support structure.

6. Unit according to any one of the preceding claims, characterized in that it has means for locking the body in the retracted position.

## Patentansprüche

1. Im Falle eines Stoßes axial zurückziehbare Lenksauleneinheit, insbesondere für ein Kraftfahrzeug, umfassend eine Trägerkonstruktion (1), die an dem Fahrzeug befestigt ist und an der die Enden eines Lenksäulenkörpers (2) befestigt sind, in dem eine Lenkspindel (3) angeordnet ist, sowie Mittel (8) zum axialen Zurückziehen des Säulenkörpers und somit der Lenkspindel im Falle eines Stoßes, wobei diese Mittel (8) zum Zurückziehen eine Krafterzeugungsvorrichtung umfassen, die bei einem Stoß ausgeklinkt wird, um den Körper (2) in bezug auf die Trägerkonstruktion zu verschieben, wobei diese Erzeugungsvorrichtung zwei in bezug zueinander verschiebbare Teile umfaßt, von welchen einer (9) mit der Trägerkonstruktion (1) und der andere (10) mit dem Körper in der Nähe eines seiner Enden verbunden ist, wobei dieses Ende des Körpers mit der Trägerkonstruktion (1) durch beim Ausklinken der Krafterzeugungsvorrichtung ausrückbare Befestigungsmittel (20, 21) verbunden ist, und Führungsmittel (16, 17) umfaßt, die zum Zusammenwirken mit komplementären Führungsmitteln (18, 19) der Trägerkonstruktion (1) ausgebildet sind, dadurch gekennzeichnet, daß die Befestigungsmittel des anderen Endes des Körpers an der Trägerkonstruktion (1) ein Führungslager (22) umfassen und daß der Lenksäulenkörper (2) und die Lenkspindel (3) jeweils zwei teleskopische ineinanderliegende Teile (30, 31, 32, 33) umfassen.

2. Einheit nach Anspruch 1, dadurch gekennzeichnet, daß die ausrückbaren Befestigungsmittel Abscherbolzen (20, 21) umfassen.

3. Einheit nach Anspruch 1, dadurch gekennzeichnet, daß die ausrückbaren Befestigungsmittel Reibungssperrmittel umfassen.

4. Einheit nach einem der vorangehenden Ansprüche, dadurch gekennzeichnet, daß der Säulenkörper eine Befestigungsklemme (13) umfaßt, die seitliche Flügel (14, 15) aufweist, die mit Befestigungsmitteln (20, 21) und Führungsmitteln (16, 17) vergehen sind.

5. Einheit nach Anspruch 4, dadurch gekennzeichnet, daß die Führungsmittel des Körpers Gleitschuhe (16, 17) der seitlichen Flügel der Befestigungsklemme des Körpers umfassen, wobei diene Schuhe mit den Gleitschienen (18, 19) der Trägerkonstruktion zusammenwirken.

6. Einheit nach einem der vorangehenden Ansprüche, dadurch gekennzeichnet, daß sie Mittel zur Verriegelung in einer vom Körper zurückgezogenen Position umfaßt.
